# EUROPÄISCHE PATENTANMELDUNG

(11) **EP 1 734 205 A1**
(43) Veröffentlichungstag der Anmeldung: **20.12.2006**
(21) Anmeldenummer: 06012113.4
(22) Anmeldetag: 13.06.2006
(51) Int. Cl.: E04G 21/14, E04B 1/80, E04B 2/86

(54) **Transportanker für ein Wandelement mit einer zwischen zwei Betonfertigteilen angeordneten Vakuumisolierplatte**

(30) Priorität: 16.06.2005 DE 102005027975
(71) Anmelder: Variotec Sandwichelemente GmbH & Co. KG, 92318 Neumarkt (DE)
(72) Erfinder: Stölzel, Christof, 92318 Neumarkt/Voggenthal (DE)
(74) Vertreter: Zinnecker, Armin

(57) **Zusammenfassung**

Ein Transportanker für ein Wandelement, umfassend eine Vakuumisolationsplatte (38), ein äußeres Betonfertigteil und ein inneres Betonfertigteil (1), ist gekennzeichnet durch ein Verbindungsteil (31), das mit dem Wandelement (13) lösbar verbindbar ist, und ein Hakenelement (32) (Fig. 1).

## Beschreibung

Die Erfindung betrifft einen Transportanker für ein Wandelement und ein Wandelement, das durch einen derartigen Transportanker gekennzeichnet ist.

Das Wandelement umfaßt eine oder mehrere Vakuumisolationsplatten, ein äußeres Betonfertigteil und ein inneres Betonfertigteil, die durch Anker miteinander verbunden sind.

Ein derartiges Wandelement wird in der prioritätsälteren, nicht vorveröffentlichten Europäischen Patentanmeldung Nr. 04 029 733 beschrieben. Es umfaßt eine Vakuumisolationsplatte, die in der genannten Voranmeldung als Verbundwärmedämmplatte bezeichnet wird, und zwei auf beiden Seiten der Vakuumisolationsplatte vorgesehene Betonteile, die unmittelbar an die Vakuumisolationsplatte angrenzen.

Die Vakuumisolationsplatte umfaßt eine oder mehrere Vakuumdämmplatten aus einem evakuierbaren, porösen Material geringer Wärmeleitfähigkeit und eine vakuumdichte Umhüllung, insbesondere eine gasdichte und diffusionsdichte Umhüllung. Besonders geeignet sind Folien aus Kunststoff, Folien aus Metall, insbesondere aus Aluminium, oder Folien aus Kunststoff und Metall, insbesondere eine metallisierte Hochbarrierefolie aus Kunststoff. Die Vakuumdämmplatten bilden den Kern der Vakuumisolationsplatte. Als Material für die Vakuumdämmplatten sind insbesondere mikroporöse Kieselsäurepulver oder offenporige Schäume aus Polyurethan oder Polystyrol geeignet. Bei mikroporösen Kernen genügt aufgrund ihrer extrem kleinen Porengröße von weniger als einem halben Mikrometer ein Vakuum von etwa 1 bis 10 mbar. Bei offenporigen Schäumen ist es dagegen vorteilhaft oder erforderlich, daß die Gasdrücke aufgrund der gröberen Poren im Bereich von 0,1 bis 1 mbar liegen.

Wenn mehrere Vakuumdämmplatten von einer Umhüllung umgeben sind, liegen diese Vakuumdämmplatten vorzugsweise nebeneinander. Vorteilhaft ist es, die in der Europäischen Patentanmeldung 04 029 733 beschriebenen Merkmale vorzusehen. Die eine oder mehreren Vakuumdämmplatten können beidseitig von Kunststoffschaum, vorzugsweise von Polyurethanschaum, umgeben sein. Vorzugsweise ist der Kunststoffschaum bzw. Polyurethanschaum von der vakuumdichten Umhüllung abgedeckt.

Die vakuumdichte Umhüllung ist vorzugsweise von mindestens einer weiteren Platte abgedeckt, die aus Kunststoffschaum, vorzugsweise aus Polyurethanschaum, vorzugsweise aus gepresstem Polyurethanschaum, aber auch aus einem anderen Werkstoff mit niedriger Wärmeleitfähigkeit bestehen kann. Die weitere Platte ist vorzugsweise auf die Umhüllung bzw. auf die Aluminiumfolie aufgeklebt.

Nach einer weiteren vorteilhaften Weiterbildung sind die Außenkanten der Vakuumdämmplatten von einem druckstabilen Konstruktionsschaum umgeben. Der druckstabile Konstruktionsschaum umgibt vorzugsweise den gesamten umlaufenden Rand der Vakuumdämmplatten. Er weist vorzugsweise die gleiche Stärke auf wie die Vakuumdämmplatten. Vorzugsweise besteht der druckstabile Konstruktionsschaum aus Polyurethan. Zur Herstellung dieser vorteilhaften Weiterbildung kann der druckstabile Konstruktionsschaum vor dem beidseitigen Umschäumen mit Kunststoffschaum im Kantenbereich der Vakuumdämmplatten in vorzugsweise gleicher Stärke als Abstandshalter eingelegt werden.

Eine weitere vorteilhafte Weiterbildung ist dadurch gekennzeichnet, daß die Außenkanten der Vakuumdämmplatten bzw. des druckstabilen Konstruktionsschaums von einer Hochbarrierefolie umgeben sind. Die Hochbarrierefolie wirkt vorzugsweise als Diffusionssperrschicht, die eine Permeation von Gas und Wasserdampf in die Vakuumdämmplatten verhindert. Sie ist vorzugsweise gasdicht und diffusionsdicht. Die Hochbarrierefolie ist vorzugsweise aus Kunststoff, vorzugsweise aus Butyl. Sie kann allerdings auch aus einem beschichteten Gewebe bestehen, insbesondere aus einem mit Butyl oder einem anderen geeigneten Kunststoff beschichteten Gewebe. Vorteilhaft ist es, wenn die Hochbarrierefolie U-förmig ausgestaltet ist.

Vorteilhaft ist es, wenn die Hochbarrierefolie an der vakuumdichten Umhüllung anliegt. Die Hochbarrierefolie ist vorzugsweise mit der Umhüllung verklebt. Vorteilhaft ist es, wenn die Hochbarrierefolie U-förmig ist und die Schenkel der Hochbarrierefolie an der Umhüllung anliegen bzw. mit der Umhüllung verklebt sind.

Zur Herstellung dieser vorteilhaften Weiterbildung kann um die Außenkanten der Vakuumdämmplatten bzw. des druckstabilen Konstruktionsschaums eine vorzugsweise U-förmige Hochbarrierefolie herumgelegt werden. Die Schenkel der Hochbarrierefolie können mit der vakuumdichten Umhüllung verklebt werden, so daß der Innenraum gut gegen eindringende Gase und Feuchtigkeit geschützt ist.

Nach einer weiteren vorteilhaften Weiterbildung sind die Außenkanten der Vakuumdämmplatten von einem vorkomprimierten Fugendichtband (Compriband) umgeben, das seinerseits von einer Hochbarrierefolie umgeben ist, insbesondere von einem Butylband.

An oder in einer oder mehreren oder allen Vakuumdämmplatten kann ein Sensor zur Überprüfung des Gasdrucks angebracht sein. Der Sensor kann über elektrische Zuleitungen ausgelesen werden.

Eine oder mehrere oder alle Vakuumdämmplatten können Aussparungen aufweisen, in die Anker eingesetzt werden oder sind. Die Aussparungen können sich in der Mitte und/oder an den Rändern der Vakuumdämmplatten befinden. Zur Herstellung dieser vorteilhaften Weiterbildung können an Stellen, an denen Aussparungen in den Vakuumdämmplatten vorhanden sind, durch die Vakuumisolationsplatte hindurch Löcher gefräst und dort Anker eingesetzt werden. Die Anker sind vorzugsweise aus einem Material mit niedriger Wärmeleitung und/oder hoher mechanischen Festigkeit hergestellt, vorzugsweise aus Kohlefaser, Glasfaser oder vergleichbaren Werkstoffen wie beispielsweise Wood Composites Plastic. Besonders geeignet sind GFK-Werkstoffe und kohlefaserverstärkter Kunststoff.

Zur Herstellung des Wandelements kann die Vakuumisolationsplatte auf eine Betonplatte, insbesondere auf eine frisch gegossene Betonplatte, gesetzt werden. Die andere Seite der Vakuumisolationsplatte kann ebenfalls mit Beton ausgefüllt werden, vorzugsweise in einer Betonschalung. Die Anker können dabei eine innige Verbindung mit der Betonplatte und/oder dem Beton und/oder der Betonschalung eingehen. Wenn die Vakuumisolationsplatte mit ihrer unteren Seite auf die vorzugsweise frisch gegossene Betonplatte gesetzt wird, wird ihre obere Seite in der beschriebenen Weise vorzugsweise in einer Betonschalung mit Beton ausgefüllt.

Eine weitere vorteilhafte Weiterbildung ist dadurch gekennzeichnet, daß die Vakuumisolationsplatte mit einer Innenplatte und mit einer Außenplatte aus Beton verbunden ist. Die Verbindung der Vakuumisolationsplatte mit der Innenplatte und/oder der Außenplatte erfolgt vorzugsweise durch Verkleben. Die Innenplatte und/oder die Außenplatte sind mit der Vakuumisolationsplatte über die aus der Vakuumisolationsplatte herausstehenden Anker verbunden.

Vorzugsweise ist ein Betonfertigteil von der Vakuumisolationsplatte beabstandet. Der freie Raum zwischen der Vakuumisolationsplatte und diesem Betonfertigteil wird durch einen oder mehrere Anker überbrückt. In diesen Raum kann bei der Herstellung eines Gebäudes Ortbeton eingebracht werden. Hierdurch kann die Wandstärke erhöht werden. Ferner kann die Wand einfach und schnell hergestellt werden.

Es ist möglich, daß beide Betonfertigteile von der Vakuumisolationsplatte beabstandet sind. In den meisten Fällen ist es allerdings vorteilhaft, wenn nur eines der beiden Betonfertigteile von der Vakuumisolationsplatte beabstandet ist.

Vorteilhaft ist es, wenn das innere Betonfertigteil von der Vakuumisolationsplatte beabstandet ist. Dabei ist es vorteilhaft, wenn in diesem Fall das äußere Betonfertigteil nicht von der Vakuumisolationsplatte beabstandet ist.

Aufgabe der Erfindung ist es, eine Transportmöglichkeit für ein derartiges Wandelement vorzuschlagen.

Erfindungsgemäß wird diese Aufgabe durch einen Transportanker gelöst, der durch ein Verbindungsteil, das mit dem Wandelement lösbar verbindbar ist, und ein Hakenelement, das vorzugsweise als Haken oder Öse ausgestaltet ist, gekennzeichnet ist. Der Transportanker kann zum Transport des Wandelements mit diesem verbunden werden. Insbesondere kann das Wandelement durch den Transportanker an einen Kran gehängt werden. Es kann auf diese Weise positioniert werden. Nach dem Transport und/oder der Positionierung kann der Transportanker vom Wandelement gelöst werden.

Vorteilhafte Weiterbildungen sind in den Unteransprüchen beschrieben.

Vorteilhaft ist es, wenn das Verbindungsteil mit einem Betonfertigteil, vorzugsweise mit dem äußeren Betonfertigteil, lösbar verbindbar ist.

Das Verbindungsteil ist vorzugsweise mit dem Wandelement bzw. dem Betonfertigteil verschraubbar. Zu diesem Zweck kann das Verbindungsteil Schraublöcher aufweist.

Vorteilhaft ist es, wenn das Hakenelement drehbar gelagert ist. Hierdurch kann die Positionierung des Wandelements erleichtert werden.

Vorzugsweise ist das Verbindungsteil als Winkelprofil ausgebildet. Vorteilhaft ist es, wenn ein Schenkel des Winkelprofils mit dem Wandelement bzw. Betonfertigteil lösbar verbindbar ist und/oder wenn der andere Schenkel mit dem Hakenelement versehen ist.

Die Erfindung betrifft ferner ein Wandelement der eingangs angegebenen Art, das durch einen erfindungsgemäßen Transportanker gekennzeichnet ist.

Vorteilhaft ist es, wenn an einem Betonfertigteil des Wandelements, vorzugsweise an dem äußeren Betonfertigteil, eine Befestigungsplatte vorgesehen ist. Das Betonfertigteil, an dem die Befestigungsplatte vorgesehen ist, ist vorzugsweise länger als das andere Betonfertigteil, so daß es das andere Betonfertigteil überragt. Die Befestigungsplatte dient zum Befestigen des Transportankers. Sie kann Befestigungselemente aufweisen, insbesondere Schraubgewinde für Befestigungsschrauben.

Vorteilhaft ist es, wenn die Befestigungsplatte in dem Bereich des Betonfertigteils vorgesehen ist, der das andere Betonfertigteil überragt.

Ein Ausführungsbeispiel der Erfindung wird nachstehend anhand der beigefügten Zeichnung im einzelnen erläuter. In der Zeichnung zeigt
- Fig. 1: ein Wandelement und einen Transportanker in einer Seitenansicht und
- Fig. 2: einen Schnitt längs der Linie A-A in Fig. 1.

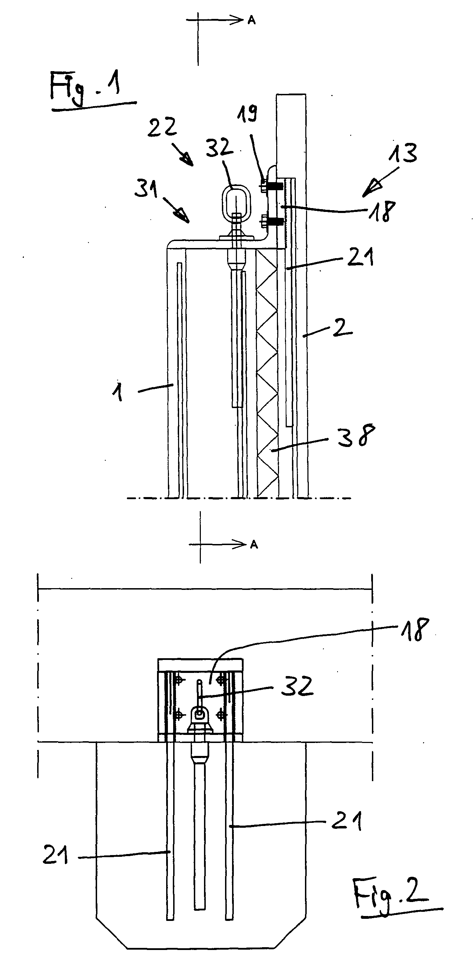

Das in Fig. 1 gezeigte Wandelement 13 umfaßt eine Vakuumisolationsplatte (VIP) 38, ein äußeres Betonfertigteil 2 und ein inneres Betonfertigteil 1, die durch Anker, nämlich GFK-Anker, miteinander verbunden sind. Das innere Betonfertigteil 1 ist von der Vakuumisolationsplatte 38 beabstandet. Bei der Herstellung der Wand wird der Zwischenraum zwischen der Vakuumisolationsplatte 38 und dem inneren Betonfertigteil 1 durch Ortbeton 3 gefüllt.

Die Anker sind vorzugsweise aus einem Material mit einer geringen Wärmeleitfähigkeit und/oder mit einer hohen mechanischen Festigkeit hergestellt. Besonders geeignet sind GFK-Werkstoffe und kohlefaserverstärkter Kunststoff. Die Anker sind von jeweils einer Hülse umgeben. Ferner sind im Bereich der Anker beidseits der Vakuumisolationsplatten 38 Abdeckscheiben vorgesehen, die eine mittige Öffnung zum Durchtritt eines Ankers aufweisen, die sich an die Enden der Hülsen nach außen anschließen und die die an die Hülsen anschließenden Bereiche der Vakuumisolationsplatten 38 abdecken. Die Hülsen und/oder die Abdeckscheiben dienen zur Wärmeisolation der Anker Sie tragen dazu bei, daß die Anker keine Wärmebrücken bilden.

Das äußere Betonfertigteil 2 ist länger als das innere Betonfertigteil 1. Es ist auch länger als die Vakuumisolationsplatte 38. Das innere Betonfertigteil 1 und die Vakuumisolationsplatte 38 enden auf derselben Höhe. Das äußere Betonfertigteil 2 überragt das innere Betonfertigteil 1 und die Vakuumisolationsplatte 38.

An dem äußeren Betonfertigteil 2 ist eine Befestigungsplatte 18 vorgesehen, die sich auf der dem inneren Betonfertigteil 1 und der Vakuumisolationsplatte 38 zugewandten Seite des äußeren Betonfertigteils 2 befindet. Die Befestigungsplatte 18 beginnt am oberen Ende des inneren Betonfertigteils 1 und der Vakuumisolationsplatte 38. Sie endet etwa auf halber Höhe des das innere Betonfertigteil 1 und die Vakuumisolationsplatte 38 überragenden Bereichs des äußeren Betonfertigteils 2.

Die Befestigungsplatte 18 ist mit vier im Rechteck bzw. Quadrat angeordneten Gewindelöchern für die Befestigungsschrauben 19 versehen. Ferner sind an die hintere Seite der Befestigungsplatte 18 zwei parallele, beabstandete, nach unten weisende Stahlstäbe 21 angeschweißt. Bei der Herstellung des äußeren Betonfertigteils 2 wird die Befestigungsplatte 18 vor dem Einbringen des Betons in entsprechender Weise positioniert.

Mit dem Wandelement 13 ist ein Transportanker 22 lösbar verbunden. Der Transportanker 22 umfaßt ein Verbindungsteil 31 und ein Hakenelement 32. Das Verbindungsteil 31 ist durch die Befestigungsschrauben 19 mit dem Wandelement 13, nämlich der Befestigungsplatte 18 des äußeren Betonfertigteils 2, verschraubt. Es ist als Winkelprofil ausgebildet, wobei ein Schenkel, nämlich der vertikale Schenkel, vier im Rechteck bzw. Quadrat angeordnete Durchgangslöcher für die Befestigungsschrauben 19 aufweist. An dem anderen Schenkel, nämlich dem horizontalen Schenkel, ist das als Öse ausgebildete Hakenelement 32 drehbar befestigt.

Beim Transport und bei der Positionierung des Wandelements 13 wird ein Kranhaken in das Hakenelement 23 eingehängt. Anschließend kann das Wandelement 13 positioniert werden und insbesondere auch gedreht werden. Wenn das Wandelement 13 richtig positioniert worden ist, können die Befestigungsschrauben 19 gelöst werden, so daß der Transportanker 22 von dem Wandelement 13 entfernt werden kann.

Der horizontale Schenkel des Verbindungsteils 31 endet an der Innenseite des inneren Betonfertigteils 1. Der Eckpunkt des L-förmigen Verbindungsteils 31 liegt an der Verbindungsstelle zwischen dem äußeren Betonfertigteil 2 und der Wärmeisolationsplatte 38. Der vertikale Schenkel des Verbindungsteils 31 überragt die Befestigungsplatte 18.

## Patentansprüche

1. Transportanker für ein Wandelement, umfassend eine Vakuumisolationsplatte (38), ein äußeres Betonfertigteil (2) und ein inneres Betonfertigteil (1), die durch Anker miteinander verbunden sind,
**gekennzeichnet durch**
ein Verbindungsteil (31), das mit dem Wandelement (13) lösbar verbindbar ist, und ein Hakenelement (32).

2. Transportanker nach Anspruch 1, **dadurch gekennzeichnet, daß** das Verbindungsteil (31) mit einem Betonfertigteil (2) lösbar verbindbar ist.

3. Transportanker nach Anspruch 1 oder 2, **dadurch gekennzeichnet, daß** das Verbindungsteil (31) mit dem Wandelement (13) bzw. Betonfertigteil (2) verschraubbar ist.

4. Transportanker nach einem der vorhergehenden Ansprüche, **dadurch gekennzeichnet, daß** das Hakenelement (32) drehbar ist.

5. Transportanker nach einem der vorhergehenden Ansprüche, **dadurch gekennzeichnet, daß** das Verbindungsteil (31) als Winkelprofil ausgebildet ist.

6. Wandelement, umfassend eine Vakuumisolationsplatte (38), ein äußeres Betonfertigteil (2) und ein inneres Betonfertigteil (1), die durch Anker miteinander verbunden sind,
**gekennzeichnet durch**
einen Transportanker (22) nach einem der Ansprüche 1 bis 5.

7. Wandelement nach Anspruch 6, **dadurch gekennzeichnet, daß** ein Betonfertigteil, vorzugsweise das innere Betonfertigteil (1), von der Vakuumisolationsplatte (38) beabstandet ist.

8. Wandelement nach Anspruch 6 oder 7, **dadurch gekennzeichnet, daß** an einem Betonfertigteil (2) eine Befestigungsplatte (18) vorgesehen ist.

9. Wandelement nach Anspruch 8, **dadurch gekennzeichnet, daß** ein Betonfertigteil (2) das andere Betonfertigteil (1) überragt und daß die Befestigungsplatte (18) in dem überragenden Bereich des Betonfertigteils (2) vorgesehen ist.
